# EUROPEAN PATENT SPECIFICATION

(11) **EP 3 987 206 B1**
(45) Date of publication and mention of the grant of the patent: **04.12.2024**
(21) Application number: 20754827.2
(22) Date of filing: 19.06.2020
(51) Int. Cl.: F16K 31/122, F16K 11/052, F16K 31/163, F16K 37/00

(54) **MACHINE FOR TREATING FABRICS WITH AN ADJUSTABLE AIR FLOW**
MASCHINE ZUR BEHANDLUNG VON GEWEBEN MIT EINSTELLBAREM LUFTSTROM
MACHINE DE TRAITEMENT DE TISSUS À FLUX D'AIR RÉGLABLE

(30) Priority: 19.06.2019 IT 201900009549
(43) Date of publication of application: 27.04.2022
(73) Proprietor: Biancalani S.R.L., 59100 Prato (IT)
(72) Inventor: BIANCALANI, Massimo, 59100 Prato (IT); TOCCAFONDI, Maurizio, 50013 Campi Bisenzio (FI) (IT)
(74) Representative: Martini, Riccardo
(86) International application number: PCT/IB2020/055804
(87) International publication number: WO 2020/255078

(56) References cited:
- WO-A1-2015/007859
- WO-A1-2015/132757
- DE-C1- 10 122 297
- DE-U1- 20 211 915
- KR-A- 20020 058 997
- US-A- 6 050 172
- US-B1- 6 230 606

## Description

### Technical field

The present invention relates to a machine for treating of fabrics with an adjustable air flow.

### Prior art

Continuous, open-width treatment machines, known as tumblers, are known to be widely used in fabric finishing, to impart fiber swelling effects, softness and pleasant feel to fabrics of any type.

Such machines comprise a straight pneumatic duct and at least one flow diverter, movable between two extreme positions, to convey all the air inside the duct in either direction.

Thus, the fabric is driven at high speed toward one of the two openings of the duct and is cyclically transferred from one to the other of two accumulations arranged at the two ends of the duct.

Impact grids, suitably arranged in front of the two openings of the transfer duct, stop the fabric, and allow air to keep flowing toward two hoods placed above the accumulations.

Systems for slow transfer of the fabric, at the manufacturing speed, feed the fabric to the first accumulation and pick it up in an equal amount from the second accumulation.

A machine as described above is disclosed in WO2006021978A1.

DE102005034579A1 discloses a "back-step" machine for continuously drying a textile web with blowing means associated with the two surfaces of the web. The blowing means includes a pair of nozzles blowing on both surfaces of the web at the same time but alternately in the web conveying direction or in the opposite direction. This is achieved by providing each nozzle with deflector means which channel all the air onto the surface of the web alternately in the conveying direction and opposite to this direction.

EP2535451A1 shows a continuous treatment machine having an air flow diverter within the transfer duct, which diverter has a third work position in which the total horizontal component of the air flow in the duct is substantially zero, with the fabric being kept substantially still.

KR-A-20020058997 discloses a machine for treating a fabric with air, comprising a duct for pneumatic transfer of the fabric, means for injecting air into the duct above the fabric and comprising a diverter valve located substantially at half of the duct and having two channels oriented to direct the air flow introduced into the duct in either direction. Said valve has an angularly orientable deflector for entirely or partially blocking access of air to said channels. The deflector is controlled by means of a pneumatic cylinder.

WO2015132757A1, by the Applicant hereof, discloses a machine having air flow diverter valves, controlled by means of opposite pneumatic cylinders, which valves comprise an orientable deflector which is able to completely or partially block air access to the channels leading to the duct. When the deflectors partially block access to one of the channels, they simultaneously leave the other channel open, and divide the air flow into two components, a larger one, directed toward one end of the duct, and a smaller one directed in the opposite direction toward the other end of the duct. While this machine fulfills marker requirements, it is still susceptible of improvements, in particular concerning the operation of the air flow diverting valve. Namely, since air is introduced into the valves at high pressure and speed, the pneumatic cylinder must exert a very high positive force to move the deflector from a rest position (in which it remains as fabric is being transferred to a treatment half cycle).

Conversely, when the deflector reaches the center line of its intended path, substantially parallel to the air flow, the force becomes almost zero. Once the deflector has moved past the center line, the force will increase again to the maximum value, but changed in sign, i.e. the pneumatic cylinder must "brake" the deflector.

In practice, the pneumatic cylinder initially acts with a high starting force, required to move the deflector, and then moves to an intermediate step in which air resistance becomes substantially zero, whereas the pneumatic pushing force remains unchanged, resulting in an increase of the deflector speed to a maximum, which is attained at the end of its stroke when a sudden stop is triggered by the pneumatic cylinder.

Since the control air of the pneumatic cylinder is compressible, the stopping accuracy and the position is poorly repeatable.

This leads to two drawbacks:
- when the deflector reaches the extreme positions, in which it completely closes the channels that introduce air into the duct, inaccurate stopping causes the deflector to violently hit the limit stop abutment, which might lead to damage of the deflector moving shaft;
- if the deflector partially closes the channels, inaccurate stopping causes a positioning error at each cycle, leading to variable thrust on the fabric and different impacts of the fabric on the grid.

### Disclosure of the invention

The main object of the present invention is to provide a machine for treating fabrics with air in which the operation of the air flow diverter valve is not affected by the aforementioned drawbacks.

An additional object of the invention is to provide a machine having a more efficient system for distributing air flows in the fabric transferring duct.

These objects are fulfilled by a machine as defined in the appended claims.

The advantages of the invention, as well as the characteristics of the machine, will be more clearly illustrated in the following description and in the accompanying drawings, given as a non-limiting example.

### Brief description of the drawings

In the drawings:
- FIG. 1 shows a schematic longitudinal sectional view of a continuous open-width treatment tumbler;
- Fig. 2 shows an enlarged schematic sectional view of the system for distributing air inside the fabric transferring duct, located in a tumbler according to one embodiment of the invention;
- Figs. 3a-3d show the four operating configurations of the distribution system of Fig. 2;
- Fig. 4 shows a schematic view of a device for controlling a flow-diverting valve according to the invention.

### Embodiments of the invention

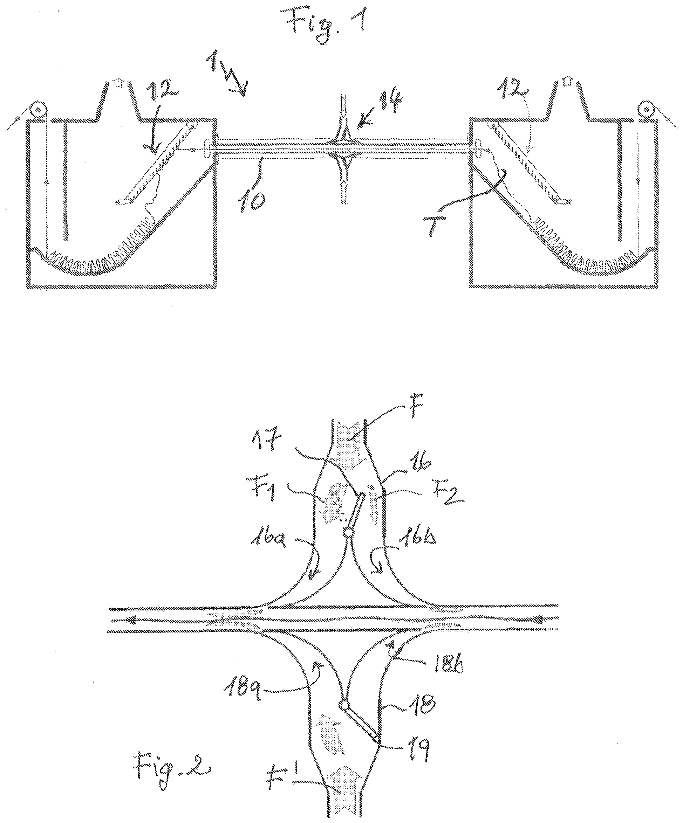

Figure 1 shows a schematic longitudinal sectional view of a continuous open-width operating tumbler 1, which has a duct 10, with a rectangular cross section, for pneumatic transfer of a fabric T and impact grids 12 facing the openings of the duct.

An air injection system 14 is located inside the duct 10, substantially in the middle, typically above and below the fabric. The air flow is generated by means not shown and well known.

This system 14 - which is shown in enlarged scale and in greater detail in Figure 2 - comprises two diverter valves, an upper valve 16 and a lower valve 18, respectively having two upper channels 16a, 16b and two lower channels 18a, 18b conveniently oriented to direct the flow of air introduced into the duct in one direction or the other.

The upper valve 16 is equipped with an angularly adjustable deflector 17, which is adapted to completely or partially block access to the upper channels 16a, 16b, and the lower valve 18 is equipped with an adjustable deflector 19 which is adapted to completely block access to the lower channels 18a, 18b.

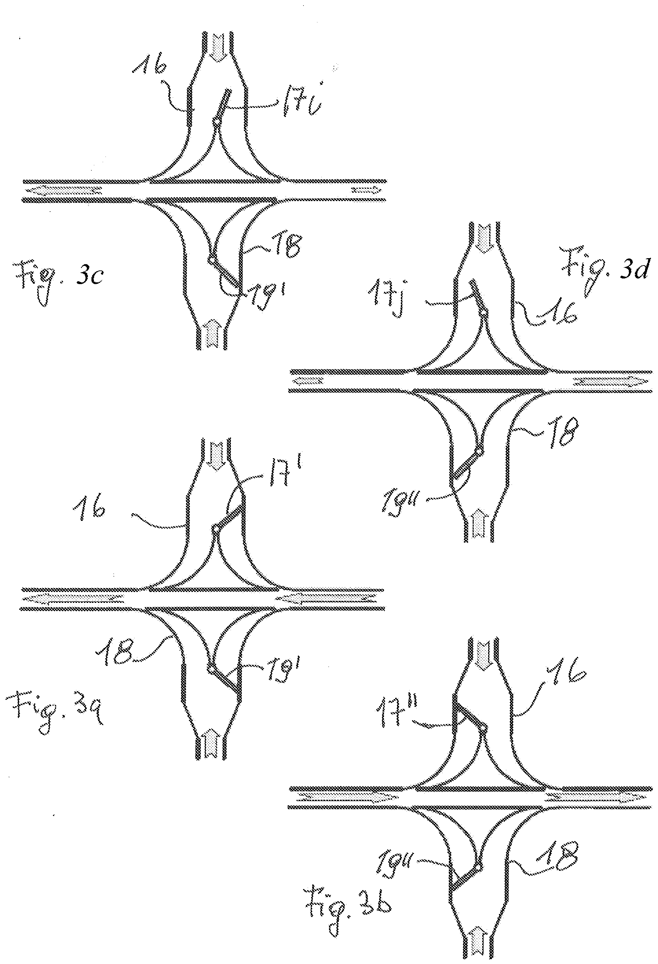

As a result, the upper valve 16 may operate in two distinct modes, since the deflector 17 may alternately assume two end positions 17', 17" as shown in Figures 3a,3b, or two intermediate positions 17i,17j falling between the end positions and shown in Figures 3c,3d.

On the other hand, in the lower valve 18, the deflector 19 may alternately assume only two extreme positions 19', 19".

In the former case, in each cycle, each of the two channels 16a, 16b and 18a, 18b is completely closed and the entire air flow introduced is deflected in either direction of the duct.

In the latter case (as shown in greater detail in Figure 2), in each cycle, each of the two upper channels 16a, 16b is only partially closed, which causes the flow F to be distributed into two unequal components, a higher intensity component F1 addressed via the channel without the deflector 17 toward one end of the duct, and a lower intensity component F2 which is addressed via the channel partially closed by the deflector in the opposite direction, i.e. toward the other end of the duct.

Also, as one of the two channels 16a, 16b of the upper valve 16 is partially closed, the corresponding channel 18a, 18b of the lower valve 18 is completely closed. Therefore, the air flow F' that enters the lower valve 18, is entirely directed alternately toward one or the other end of the duct.

The above described operation has proved to be particularly effective in terms of mechanical fabric driving action and drying.

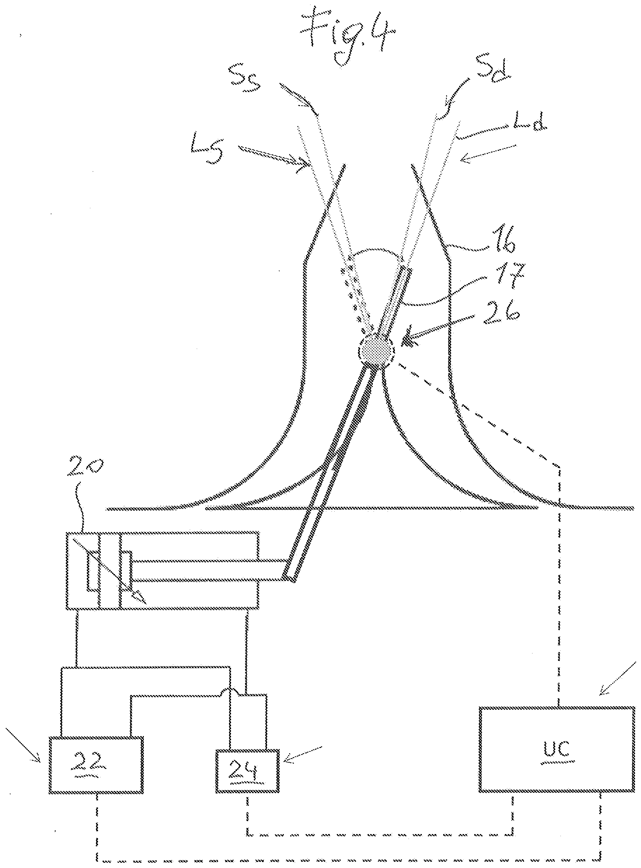

Figure 4 schematically shows a device for controlling a flow-diverting valve according to the invention.

The device comprises a pneumatic cylinder 20 connected to the deflector 17 and actuated by two pneumatic solenoid valves 22, 24 arranged in parallel, a well-known electronic sensor 26 placed on the shaft of the deflector 17 for measuring the angular position thereof and a control unit UC.

In particular, the two pneumatic solenoid valves are 5/3 solenoid valves with different flow rates: a relatively high flow rate for the first solenoid valve 22 and a relatively low flow rate for the second solenoid valve 24. Advantageously, the ratio of the two flow rates is 6: 1 to 4: 1, preferably 5:1.

The different flow rates of the two pneumatic solenoid valves 22,24 cause the operating speeds of the pneumatic cylinder 20 to be higher or lower respectively depending on whether the actuation occurs by means of the first solenoid valve 22 or the second solenoid valve 24.

Advantageously, this provides the following operation.

Given that the control unit UC instantly checks the position of the deflector 17 via the sensor 26 and that two threshold values Sd, Ss for the rotation angle are defined close to the values Ld, Ls of the rotation angles corresponding to the stop positions (and rotation reversal) of the deflector, the deflector 17 is moved from a rest position (at the beginning of each fabric treatment half cycle) by operating the pneumatic cylinder 20 by means of the first solenoid valve 22 having the higher flow rate, which affords a quick start and a high cruising speed of the deflector 17.

When the sensor 26 detects that the deflector 17 exceeds the threshold angles Sd,Ss, the control unit UC closes the first high-flow rate electropneumatic valve 22 of large flow rate and actuates the low-flow rate valve 24.

The result is that the pneumatic cylinder 20 and the deflector 17 suddenly slow down without stopping until they reach the extreme angular position, whereupon the control unit UC also stops the second pneumatic solenoid valve 24, thereby stopping the piston of the cylinder with a high accuracy, given the low speed immediately before the stop.

Therefore, system management parameters are related to the desired target angle and the threshold value that was set before reaching the target value.

Since reduction of the air flow introduced into the duct by the lower valve 18 does not provide significant advantages, the lower deflector is advantageously actuated using a single 5/2 pneumatic solenoid valve.

The system is thus simpler and more cost-effective.

## Claims

1. A machine for treating a fabric (T) with air, comprising a duct (10) for pneumatic transfer of the fabric, means for injecting air into the duct above the fabric and comprising a first diverter valve (16) located substantially at half of the duct and
having two channels (16a,16b) oriented to direct the air flow (F) introduced into the duct in either direction, said valve (16) having an angularly orientable deflector (17) for entirely or partially blocking access of air to said channels (16a, 16b), said deflector being controlled by means of a pneumatic cylinder (20),
**characterized in that** said pneumatic cylinder is a double action cylinder having two chambers and **in that** the machine further comprises:
- an electronic sensor (26) for measuring the angular position of the deflector (17);
- means for actuating the pneumatic cylinder (20) comprising two pneumatic solenoid valves (22,24) arranged in parallel, both being in flow communication with both chambers of the cylinder and having different flow rates, the first pneumatic solenoid valve (22) having a greater flow rate than the second pneumatic solenoid valve (24), the different flow rates of the two pneumatic solenoid valves (22,24) causing the operating speeds of the pneumatic cylinder (20) to be higher or lower respectively depending on whether the actuation occurs by means of the first solenoid valve (22) or the second solenoid valve (24); and
- a control unit (UC) connected to the sensor and to the solenoid valves for detecting the angular position of the deflector and the actuation of the cylinder.

2. A machine as claimed in claim 1, wherein said pneumatic solenoid valves (22,24) are of 5/3 type and have flow rates ranging from 6:1 to 4:1, preferably of 5:1.

3. A machine as claimed in any of the preceding claims, wherein said means for injecting air into the duct comprise a second diverter valve (18) located below the duct at the first diverter valve (16) and having two channels (18a,18b) oriented to direct the air flow (F') introduced into the duct in either direction by means of a second angularly orientable deflector (19) which is adapted to completely block access of the air to said channels (18a, 18b), said deflector being controlled by means of a pneumatic cylinder operated by a pneumatic solenoid valve of 5/2 type.

4. A method of treating a fabric (T) with air in a machine as claimed in any of the preceding claims, **characterized by** comprising the steps of:
- defining two threshold values (Sd,Ss) for the angle of rotation of the angularly orientable deflector (17) which are close to the values (Ld,Ls) of the angles of rotation corresponding to predetermined stop and direction-reversal positions of the deflector;
- checking the instantaneous angular position of the deflector (17) using the sensor (26) and the control unit (UC);
- moving the deflector (17) from a rest position at the beginning of each half cycle of the treatment of the fabric by actuating the pneumatic cylinder (20) by means of the control unit (UC) and the first solenoid valve (22) having a greater flow rate;
- detecting when the deflector (17) exceeds the threshold values (Sd,Ss); and
- closing the first solenoid valve (22) and actuating the second solenoid valve (24) having a smaller flow rate, to slow down the deflector (17) until it stops in the determined position (Ld, Ls).

## Patentansprüche

1. Maschine zum Behandeln eines Gewebes (T) mit Luft, die eine Leitung (10) zum pneumatischen Transport des Gewebes, Mittel zum Einblasen von Luft in die Leitung oberhalb des Gewebes und ein erstes Umlenkventil (16) umfasst, das sich im Wesentlichen in der Mitte der Leitung befindet und zwei Kanäle (16a, 16b) aufweist, die so ausgerichtet sind, dass sie den in die Leitung eingeleiteten Luftstrom (F) in jede Richtung lenken, wobei das Ventil (16) einen winkelig ausrichtbaren Deflektor (17) zum vollständigen oder teilweisen Blockieren des Luftzugangs zu den Kanälen (16a, 16b) aufweist, wobei der Deflektor mittels eines pneumatischen Zylinders (20) gesteuert wird,
**dadurch gekennzeichnet, dass** der pneumatische Zylinder ein doppeltwirkender Zylinder mit zwei Kammern ist und dass die Maschine außerdem umfasst:
- einen elektronischen Sensor (26) zum Messen der Winkelposition des Deflektors (17);
- Mittel zum Betätigen des pneumatischen Zylinders (20), die zwei parallel angeordnete pneumatische Magnetventile (22, 24) umfassen, die beide in Strömungsverbindung mit beiden Kammern des Zylinders stehen und unterschiedliche Durchflussraten aufweisen, wobei das erste pneumatische Magnetventil (22) eine größere Durchflussrate als das zweite pneumatische Magnetventil (24) aufweist, wobei die unterschiedlichen Durchflussraten der beiden pneumatischen Magnetventile (22, 24) dazu führen, dass die Betriebsgeschwindigkeiten des pneumatischen Zylinders (20) höher bzw. niedriger sind, je nachdem, ob die Betätigung mittels des ersten Magnetventils (22) oder des zweiten Magnetventils (24) erfolgt; und
- eine Steuereinheit (UC), die mit dem Sensor und den Magnetventilen verbunden ist, um die Winkelposition des Deflektors und die Betätigung des Zylinders zu erfassen.

2. Maschine nach Anspruch 1, wobei die pneumatischen Magnetventile (22, 24) vom Typ 5/3 sind und Durchflussraten von 6:1 bis 4:1, vorzugsweise von 5:1, aufweisen.

3. Maschine nach einem der vorhergehenden Ansprüche, wobei die Mittel zum Einblasen von Luft in die Leitung ein zweites Umlenkventil (18) umfassen, das sich unterhalb der Leitung am ersten Umlenkventil (16) befindet und zwei Kanäle (18a, 18b) aufweist, die so ausgerichtet sind, dass sie den in die Leitung eingeleiteten Luftstrom (F') in jede Richtung lenken, und zwar mittels eines zweiten winkelig ausrichtbaren Deflektors (19), der so angepasst ist, dass er den Zugang der Luft zu den Kanälen (18a, 18b) vollständig blockiert, wobei der Deflektor mittels eines pneumatischen Zylinders gesteuert wird, der von einem pneumatischen Magnetventil vom Typ 5/2 betätigt wird.

4. Verfahren zum Behandeln eines Gewebes (T) mit Luft in einer Maschine nach einem der vorhergehenden Ansprüche, **gekennzeichnet durch** die folgenden Schritte:
- Definieren von zwei Schwellenwerten (Sd, Ss) für den Drehwinkel des winkelig ausrichtbaren Deflektors (17), die nahe an den Werten (Ld, Ls) der Drehwinkel liegen, die vorgegebenen Stopp- und Richtungsumkehrpositionen des Deflektors entsprechen;
- Überprüfen der momentanen Winkelposition des Deflektors (17) mithilfe des Sensors (26) und der Steuereinheit (UC);
- Bewegen des Deflektors (17) aus einer Ruheposition zu Beginn jedes Halbzyklus der Behandlung des Gewebes durch Betätigen des pneumatischen Zylinders (20) mittels der Steuereinheit (UC) und des ersten Magnetventils (22) mit einer größeren Durchflussrate;
- Erkennen, wenn der Deflektor (17) die Schwellenwerte (Sd, Ss) überschreitet; und
- Schließen des ersten Magnetventils (22) und Betätigen des zweiten Magnetventils (24) mit einer geringeren Durchflussrate, um den Deflektor (17) zu verlangsamen, bis er in der bestimmten Position (Ld, Ls) stoppt.

## Revendications

1. Machine de traitement d'un tissu (T) par air, comprenant un conduit (10) de transfert pneumatique du tissu, des moyens d'injection d'air dans le conduit au-dessus du tissu et comprenant une première vanne de dérivation (16) située sensiblement à la moitié du conduit et comportant deux canaux (16a, 16b) orientés pour diriger le flux d'air (F) introduit dans le conduit dans l'une ou l'autre direction, ladite vanne (16) comportant un déflecteur (17) orientable angulairement pour bloquer totalement ou partiellement l'accès de l'air auxdits canaux (16a, 16b), ledit déflecteur étant commandé au moyen d'un vérin pneumatique (20),
**caractérisée en ce que** ledit vérin pneumatique est un vérin à double effet comportant deux chambres et **en ce que** la machine comprend en outre:
- un capteur électronique (26) pour mesurer la position angulaire du déflecteur (17);
- des moyens d'actionnement du vérin pneumatique (20) comprenant deux électrovannes pneumatiques (22, 24) disposées en parallèle, toutes deux en communication fluidique avec les deux chambres du vérin et ayant des débits différents, la première électrovanne pneumatique (22) ayant un débit supérieur à celui de la deuxième électrovanne pneumatique (24), les débits différents des deux électrovannes pneumatiques (22, 24) provoquant des vitesses de fonctionnement du vérin pneumatique (20) respectivement plus ou moins élevées selon que l'actionnement se fait au moyen de la première électrovanne (22) ou de la deuxième électrovanne (24); et
- une unité de commande (UC) reliée au capteur et aux électrovannes pour détecter la position angulaire du déflecteur et l'actionnement du vérin.

2. Machine selon la revendication 1, dans laquelle lesdites électrovannes pneumatiques (22, 24) sont de type 5/3 et ont des débits allant de 6:1 à 4:1, de préférence de 5:1.

3. Machine selon l'une quelconque des revendications précédentes, dans laquelle lesdits moyens d'injection d'air dans le conduit comprennent une deuxième vanne de dérivation (18) située sous le conduit au niveau de la première vanne de dérivation (16) et comportant deux canaux (18a, 18b) orientés pour diriger le flux d'air (F') introduit dans le conduit dans l'une ou l'autre direction au moyen d'un deuxième déflecteur (19) orientable angulairement qui est adapté pour bloquer complètement l'accès de l'air auxdits canaux (18a, 18b), ledit déflecteur étant commandé au moyen d'un vérin pneumatique actionné par une électrovanne pneumatique de type 5/2.

4. Procédé de traitement d'un tissu (T) avec de l'air dans une machine selon l'une quelconque des revendications précédentes, **caractérisé en ce qu'**il comprend les étapes consistant à:
- définir deux valeurs seuils (Sd, Ss) pour l'angle de rotation du déflecteur (17) orientable angulairement qui sont proches des valeurs (Ld, Ls) des angles de rotation correspondant à des positions prédéterminées d'arrêt et d'inversion de direction du déflecteur;
- vérifier la position angulaire instantanée du déflecteur (17) à l'aide du capteur (26) et de l'unité de commande (UC);
- déplacer le déflecteur (17) à partir d'une position de repos au début de chaque demi-cycle de traitement du tissu en actionnant le vérin pneumatique (20) au moyen de l'unité de commande (UC) et de la première électrovanne (22) ayant un débit plus important;
- détecter lorsque le déflecteur (17) dépasse les valeurs seuils (Sd, Ss); et
- fermer la première électrovanne (22) et actionner la deuxième électrovanne (24) ayant un débit plus faible, pour ralentir le déflecteur (17) jusqu'à ce qu'il s'arrête dans la position déterminée (Ld, Ls).
